# EUROPEAN PATENT SPECIFICATION

(11) **EP 4 643 040 B1**
(45) Date of publication and mention of the grant of the patent: **25.11.2026**
(21) Application number: 23834228.1
(22) Date of filing: 21.12.2023
(51) Int. Cl.: F16L 3/10

(54) **PIPE CLIP WITH WIDTH CURVATURE AT FLANGES**
ROHRSCHELLE MIT BREITENKRÜMMUNG AN FLANSCHEN
ATTACHE DE TUYAU À COURBURE DE LARGEUR AU NIVEAU DE BRIDES

(30) Priority: 30.12.2022 NL 2033881
(43) Date of publication of application: 05.11.2025
(73) Proprietor: J. van Walraven Holding B.V., 3641 RK Mijdrecht (NL)
(72) Inventor: JUZAK, Marek, 3641 TK MIJDRECHT (NL); NIJDAM, Frank, 3846 JS HARDERWIJK (NL)
(74) Representative: EP&C
(86) International application number: PCT/EP2023/087341
(87) International publication number: WO 2024/141411

(56) References cited:
- EP-A1- 1 505 330
- CH-A5- 562 980
- DE-A1- 102006 060 215
- DE-U1- 29 702 170

## Description

The present invention relates to a pipe clip comprising an annular clip body for accommodating a pipe, the annular clip body having at least one pair of opposing flanges adapted to be pulled together by a tightening screw to clamp the pipe clip around the pipe. The annular clip body is adapted to accommodate the pipe and has a central axis (x) parallel to a width direction of the clip body. The flanges extend under an angle outwardly with respect to a circumferential direction of the annular clip body, whereby a transition zone having an angular portion is formed between the annular clip body and the flange.

Such a pipe clip is known, for example from NL 2008229, in which a basic pipe clip is shown having a pipe clip body including two body parts made of a metal strip, bent in a semi-circular shape with flanges on both ends. The two body parts are connected by two screws extending through the opposing flanges of the respective body parts. The screws should ensure the gripping action of the clip on the pipe accommodated in the pipe clip. To be able to do so, there should be a clearance between the flanges of the two parts, when it is clamped around the pipe.

When tightening the screws while the semi-circular portions receive the pipe and engage on the outer surface thereof, the flanges will move towards each other, and in particular the bend between the semi-circular portion and the flange will deform, which may even be a plastic deformation. This ultimately will even result in a loss of grip on the pipe as soon as two opposing flanges start touching each other.

To prevent this deformation at the bend, often a thicker strip material is used, since the yield strength of the metal material in combination with the material thickness determines the ultimate resistance of the connection against deformation. However the increase of material thickness will increase the cost of the clamps almost proportionally.

CH 562980 A5 discloses a pipe clip in accordance with the preamble of claim 1. Other pipe clips are disclosed in EP 1505330 A1, DE29702170 U1 and DE 102006060215 A1.

It is an object of the invention to provide an alternative pipe clip where deformation at the transition zone between the annular clip body and the flange is prevented or at least significantly reduced.

This object is achieved by a pipe clip according to claim 1.

The curvature in the width direction forms an arc over the width of the clip body at the transition zone. The transition zone has an angular portion and said angular portion and the arc shape in the width direction constitute a double curvature (in two different directions) at the angle which increases the bending resistance and prevents or at least reduces the bending of the flanges towards each other. Because of this increased bending resistance, the pipe clip body can be made of a thinner material, which makes it easier, more cost effective and more sustainable to produce.

According to the invention the curvature has a radius of curvature R, wherein the pipe clip is made of strip material wherein the flanges are bent outwardly with respect to the circumferential direction of the annular clip body with a bending axis x₁ substantially parallel to the central axis x, wherein the bend at the transition zone has a bending radius r about the bending axis x₁, and wherein the radius of curvature R is within a range 12r ≤ R ≤ 16r. Accordingly the transition zone has a double curvature, i.e. in two different directions with radius of curvature R and bending radius r. The radius of curvature R is relatively large. The curvature in the width direction cooperates with the bend at the transition zone so as to particularly increase the bending resistance in this transition zone. Additionally, this prevents or at least reduces the bending of the flanges towards each other. Because of the increased bending resistance, the pipe clip body can be made of a thinner material, which makes it easier, more cost-effective and more sustainable to produce. The inventive pipe clip may have these effects even at a relatively large radius of curvature, i.e. wherein the radius of curvature R may be close to being flat.

In an embodiment the curvature forms an arc over the width which has an angle of at most 100°, preferably in a range between 20° and 90°.

In an embodiment the transition zone has a radius of curvature R which is constant across the width of the clip body.

In a further embodiment the clip body has a width B, wherein the radius of curvature R is within a range of 0,7·B to 10·B.

In an embodiment a chord can be defined between the two lateral edges of the clip body at the curvature in the width direction at the transition zone, wherein the maximum chord to arc distance is smaller than ⅓·R.

In an embodiment the pipe clip is made of strip material wherein the flanges are bent outwardly with respect to the circumferential direction of the annular clip body with a bending axis x₁ substantially parallel to the central axis x, wherein the bend at the transition zone has a radius of curvature r about the bending axis x₁ and the strip material has a thickness s, and wherein the radius of curvature r is within a range s ≤ r ≤ 5s.

In an embodiment the annular clip body, at the transition zone the radius of curvature is different from a radius of curvature at the remainder of the annular clip body. The radius of curvature at the remainder of the annular clip body is such that it has a curvature in the width direction. The differing radii of curvature allow for a design of the pipe clip wherein the curvature at the remainder of the annular clip body is e.g. such that it aids in accommodating and/or retaining the pipe to be received by the pipe clip, whilst the double curvature, that is, in the two different directions, at the transition zone increases the bending resistance and prevents or at least reduces the bending of the flanges towards each other. To achieve this the curvature in the width direction at the remainder of the annular clip body may for example have a larger radius than the curvature at the transition zone. For example, such that the remainder of the annular clip body is not curved (R = ∞), or only slightly curved in the width direction.

The annular clip body may e.g. have indents, ribs or grooves defined thereon, which themselves may have radius of curvature, e.g. much smaller than radius of curvature R. But this is not what is meant with the term 'radius of curvature' for the annular clip body at the transition zone or at the remainder thereof.

A transition from one radius of curvature to a different radius of curvature can be gradual or discontinuous.

The annular clip body at the transition zone and at the remainder thereof having a curvature means that the basic material, e.g. a blank, from which the annular clip body is made is curved. For example, the blank of metal strip material the annular clip body is made from is initially flat and as a result of a process of deformation, e.g. a bending process, becomes curved.

In an embodiment the annular clip body comprises two semi-annular body parts, each having an end flange at at least one end of the semi-annular body part, wherein the flanges of the two semi-annular body parts in use are positioned opposite each other and form a pair of said at least one pairs of opposing flanges. The semi-annular body parts are preferably semi-circular or substantially semi-circular.

In a particular embodiment the two semi-annular body parts have an end flange at each end of the semi-annular body part.

Preferably the flanges of the at least one pair of opposing flanges are spaced apart in from each other when the annular clip body is in use clamped around the pipe. The interspace in the circumferential direction allows that the tightening of the pipe clip around the pipe can be well controlled by the tightening force exerted by the screw(s).

As mentioned above, the annular clip body may be made of strip material, in particular made from a metal strip. Such a strip can be cut to length and formed into the desired shape by bending. Holes in the flanges may be formed by cutting.

However, it is also envisaged that the annular clip body can be made from a metal by other forming processes, e.g. forging or 3D printing.

It is also envisaged that the annular clip body may be made from a plastic or composite material. Plastic and composite materials are ever improving and being made stronger, and the clip body may be made by a strong enough plastic or composite material.

The invention will be further elucidated in the following description with reference to the drawings, wherein:
Fig. 1 illustrates the deformation of a pipe clip according to the prior art,
Fig. 2 shows an isometric view of an embodiment of a pipe clip according to the invention,
Fig. 3 shows an isometric view of a semi-circular body part of the pipe clip of Fig. 2,
Fig. 4 shows an isometric view of a detail of the pipe clip body part of Fig. 3,
Fig. 5 shows a side elevational view of the detail of Fig. 4, and
Fig. 6 shows a top elevational view of the detail of Fig. 4.

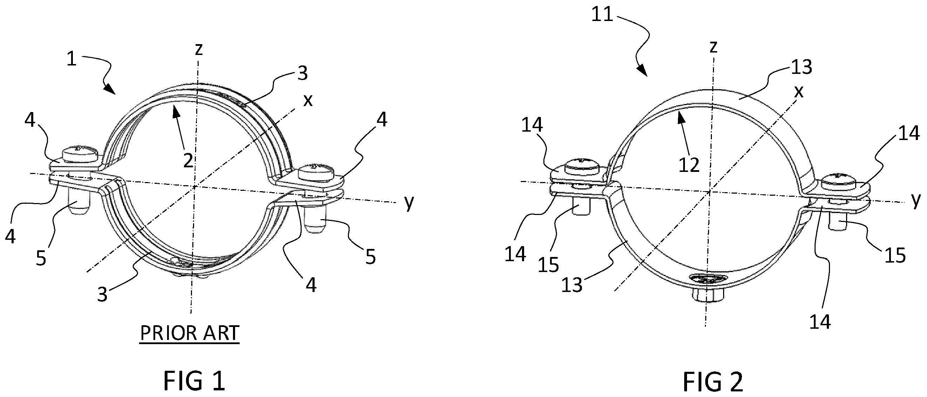

Fig. 1 shows a pipe clip 1 according to the prior art. The pipe clip 1 comprises an annular clip body 2 for accommodating a pipe. The annular clip body 2 comprises two semi-annular body parts, in this case in particular two semi-circular body parts 3, each having an end flange 4 at each end of the semi-circular body part 3. The annular clip body 2 is adapted to accommodate the pipe and has a central axis x parallel to a width direction of the clip body. The flanges 4 of the two semi-circular body parts 3 in use are positioned opposite each other as is visible in Fig. 1. The opposite flanges 4 form pairs opposing flanges. The semi-circular body parts 3 and the flanges 4 are made in one piece from a metal strip. The flanges 4 are bent outwardly with respect to a circumferential direction of the annular clip body or the semi-circular body part 3 with a bending axis substantially parallel to the central axis x, whereby a bent transition zone is formed between the annular clip body or the semi-circular body part 3 and the flange 4. The pairs of opposing flanges 4 are adapted to be pulled together by a tightening screw 5 to clamp the pipe clip 1 around a pipe (not shown).

To be able to tighten the pipe clip 1 well around the pipe there should be a clearance in the circumferential direction between the flanges 4 of the two parts 3, when it is clamped around the pipe. This is shown in Fig. 1. However, when tightening the screws 5 while the semi-circular portions 3 engage the pipe, the flanges 4 will move towards each other, and in particular the bend or angle between the semi-circular portion 3 and the flange 4 will deform, which may even be a plastic deformation. This is illustrated in Fig. 1, in which is visible that the flanges 4 incline towards each other. This ultimately will even result in a loss of grip on the pipe as soon as two opposing flanges 4 start touching each other.

In Figs 2 - 6 an embodiment of a pipe clip 11 according to the invention is illustrated. Like the pipe clip 1 in Fig. 1 the pipe clip 11 has an annular clip body 12 which comprises two semi-annular body parts 13, in this embodiment in particular two semi-circular body parts 13, each having an end flange 14 at each end of the semi-circular body part 13. The annular clip body 12 is adapted to accommodate the pipe and has a central axis x parallel to a width direction of the clip body. The flanges 14 of the two semi-circular body parts 13 in use are positioned opposite each other as is visible in Fig. 2. The flanges 14 extend substantially in a direction along an y-axis which is perpendicular to the central axis (x-axis). The flanges 14 extend in a direction that has a significant radial component, but usually is not purely radial.

In the embodiment of Fig. 2 the semi-annular body parts have a flange 14 on each end. However, there are within the scope of the invention also pipe clips conceivable wherein the semi-annular body parts are connected at one end by a hinge, and only have one flange at the other end to clamp the pipe clip around a pipe. Furthermore it is noted that within the scope of the invention also pipe clips having only one annular body part are conceivable, e.g. a circular body part, having flanges at the ends of the single annular body. Such a single body part embodiment has a flexible portion, instead of a hinge, which can be deformed to open up the pipe clip to arrange it around a pipe.

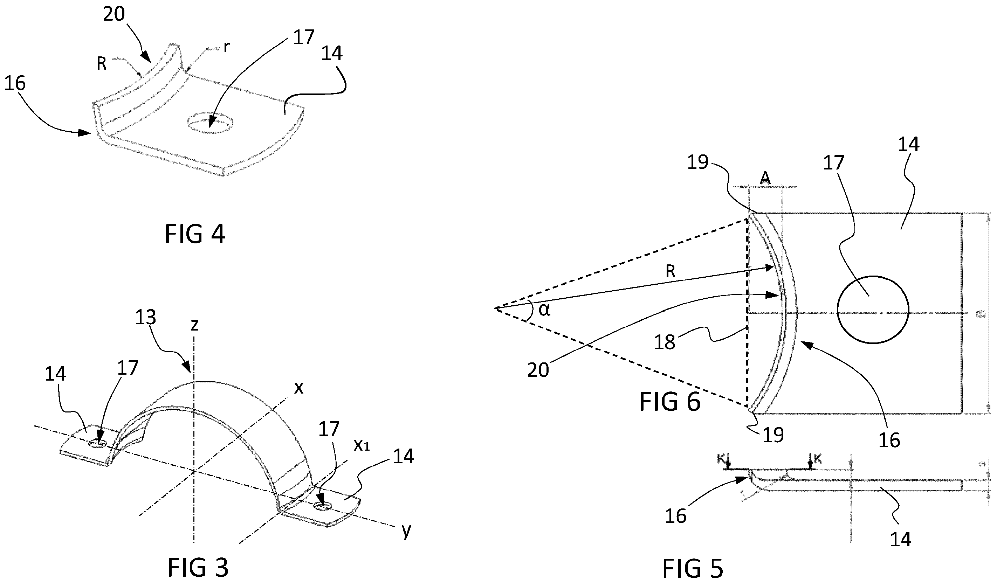

The opposite flanges 14 form pairs opposing flanges. The semi-circular body parts 13 and the flanges 14 are made in one piece from a metal strip. The flanges 14 are bent outwardly with respect to a circumferential direction of the annular clip body or the semi-circular body part 13 with a bending axis x₁ substantially parallel to the central axis x, as is illustrated in Fig. 3, whereby a bent transition zone 16 is formed between the annular clip body or the semi-circular body portion 13 and the flange 14. The bend between the semi-circular portion defines an angle. The opposing flanges 14 have a through hole 17 (cf. Fig. 3) through which a shank of a tightening screw 15 can pass (cf. Fig. 2). The opposing flanges 14 are pulled together by the tightening screw 15 to clamp the pipe clip 11 around a pipe (not shown).

The bent transition zone 16 is modified with respect to the same transition zone in the pipe clip 1 of Fig.1: According to the invention the clip body at the transition zone 16 between the semi-circular part 13 and the flange 14 has a curvature 20 in the width direction. This curvature 20 is best visible in Figs 4 and 6 and forms an arc with a radius of curvature R which is indicated in Fig. 6. In the embodiment as shown in Figs. 2 and 3 the entire semi-circular part 13 may have the curvature. However, it is also possible to provide only the portion of the semi-circular part 13 at the ends where the flanges 14 are bent and a limited portion adjacent thereto with the curvature 20 over the width. A further option is to provide a portion of the semi-circular part 13 at the ends where the flanges 14 are bent and a limited portion adjacent thereto with the curvature 20 over the width, and to provide further portions of the semi-circular part 13, e.g. the remainder of semi-circular part 13 , with a further curvature over the width thereof that is different from curvature 20. A transition from one curvature to a different curvature can be gradual or discontinuous.

In Fig. 3 hatched lines are visible on an inside of semi-circular part 13 on the side of the first flange 14 and on an outside of semi-circular part 13 on the side of the other flange 14. These hatched lines indicate that the curvature at the transition zone and in the limited portion adjacent thereto differ from a curvature in the width direction in a portion of the semi-circular part that is further away from the transition zone,

Assuming that the transition zone 16 lies in the x-y plane (cf. Fig. 3), the curvature has, at least at the transition zone 16, an axis of curvature parallel or coinciding with the z-axis indicated in Fig. 3.

The curvature 20 in the width direction thus forms an arc over the width of the clip body at the transition zone 16. The arc shape in the width direction and the bend or angle of the bent transition zone 16 in fact form a double curvature, in two more or less perpendicular directions, which increases the bending resistance and prevents or at least reduces the bending of the flanges 14 towards each other. Because of this increased bending resistance, the pipe clip body can be made of a thinner strip, which saves material and makes it possible to produce the pipe clip at lower cost, with lower effort and/or in a more sustainable way. It is noted here that the embodiment of Fig. 2 may be made from a metal strip material by a forming process including cutting and bending. However, it is envisaged that the pipe clip according to the invention may be made also from other materials by means of different manufacturing processes. It for example possible to make the pipe clip 11 by means of forming methods like molding, forging, casting or 3D printing. It is also possible to use other materials than metal, e.g. suitable plastics or composite materials having sufficient strength properties to fulfil the function of the pipe clip.

The width is of the clip body is B as is indicated in Fig 6. In embodiments according to the invention the radius of curvature R is preferably within a range of 0,7B to 10B.

In an embodiment the curvature 20 forms an arc over the width which is has an angle α (cf. Fig. 6) of at most 100°, preferably in a range between 20° and 90°. In this range the pipe clip can still engage a sufficient surface area of the pipe.

In Fig. 6 a chord 18 of the arc is indicated, which cord 18 is defined between the two lateral edges 19 of the clip body at the curvature 20 (the arc) in the width direction at the transition zone, wherein the maximum chord-to-arc distance A, which is indicated in Fig. 6, is smaller than ⅓ R.

**The bend at** the transition zone 16 between the flange 14 and the semi-circular part 13 has a bending axis x₁ and a bending radius r, which is indicated in Figs 4 and 5. The radius of curvature R is within a range 12r ≤ R ≤ 16r. The radius of curvature R is relatively large compared to the bending radius r. The metal strip of which the pipe clip body is made has a thickness s. The bending radius r is within a range s ≤ r ≤ 5s. In practical embodiments which may be qualified as "light" the thickness s of the strip material of which the clip body is made may for example be in a range 1 mm - 3 mm. In embodiments qualified which may be qualified as "heavy" the thickness s may be in a range 2,5 mm - 4mm having a width in a range 30 mm - 40 mm.

The pipe clips according to the invention may be suitable for a wide range of pipe diameters, in practice for example but not limited to pipe diameter range of 14 mm - 315 mm.

In an exemplary embodiment suitable to be clamped around a pipe with a diameter of 114 mm the thickness s of the strip material may be 2,5 mm and the width B of the pipe clip body may be between 20 and 25 mm. The strip material of which the pipe clip is formed may be made of a metal, such as steel e.g. carbon steel or stainless steel, for example having a thickness of 2,5 mm and a width of 25 mm.

## Claims

1. Pipe clip (11) comprising an annular clip body (12) for accommodating a pipe, the annular clip body (12) having at least one pair of opposing flanges (14) adapted to be pulled together by a tightening screw (15) to clamp the pipe clip (11) around the pipe,
wherein the annular clip body (12) is adapted to accommodate the pipe and has a central axis (x) parallel to a width direction of the clip body (12),
wherein the flanges (14) extend under an angle outwardly with respect to a circumferential direction of the annular clip body (12), whereby a transition zone (16) having an angular portion is formed between the annular clip body (12) and the flange (14),
wherein the annular clip body at the transition zone has a curvature (20) in the width direction, wherein the curvature (20) has a radius of curvature (R), wherein the pipe clip is made of strip material wherein the flanges (14) are bent outwardly with respect to the circumferential direction of the annular clip body (12) with a bending axis (x₁) substantially parallel to the central axis (x), wherein the bend at the transition zone has a bending radius (r) about the bending axis (x₁), and **characterized in that** the radius of curvature (R) is within a range 12r ≤ R ≤ 16r.

2. Pipe clip according to claim 1, wherein the curvature (20) has a radius of curvature (R) which is constant across the width of the clip body.

3. Pipe clip according to claim 1 or 2, wherein the clip body has a width (B), wherein the radius of curvature (R) is within a range of 0,7B to 10B.

4. Pipe clip according to any one of the preceding claims, wherein a chord (18) can be defined between the two lateral edges (19) of the clip body at the curvature (20) in the width direction at the transition zone, wherein the maximum chord to arc distance (A) is smaller than ⅓ R.

5. Pipe clip according to any one of the preceding claims, wherein the pipe clip is made of strip material wherein the flanges (14) are bent outwardly with respect to the circumferential direction of the annular clip body (12) with a bending axis (x₁) substantially parallel to the central axis (x), wherein the bend at the transition zone has a bending radius (r) about the bending axis (x₁) and the strip material has a thickness s, and wherein the bending radius (r) is within a range s ≤ r ≤ 5s.

6. Pipe clip according to any one of the preceding claims, wherein at the transition zone the radius of curvature is different from a radius of curvature at the remainder of the annular clip body.

7. Pipe clip according to any one of the preceding claims, wherein the annular clip body comprises two semi-annular body parts (13), each having an end flange (14) at at least one end of the semi-annular body part (13), wherein the flanges (14) of the two semi-annular body parts (13) in use are positioned opposite each other and form a pair of said at least one pairs of opposing flanges.

8. Pipe clip according to claim 7, wherein the two semi-annular body parts (13) have an end flange (14) at each end of the semi-annular body part (13).

9. Pipe clip according to claim 7 or 8, wherein the semi-annular body parts (13) are substantially semi-circular.

10. Pipe clip according to any one of the preceding claims, wherein the flanges (14) of the at least one pair of opposing flanges are spaced apart from each other when the annular clip body (12) is in use clamped around the pipe.

11. Pipe clip according to any one of the preceding claims, wherein the annular clip body (12) is made from a metal strip.

12. Pipe clip according to any one of the claims 1-10, wherein the annular clip body (12) is made from a plastic or composite material.

## Patentansprüche

1. Rohrschelle (11), umfassend einen ringförmigen Schellenkörper (12) zur Aufnahme eines Rohrs, wobei der ringförmige Schellenkörper (12) mindestens ein Paar gegenüberliegender Flansche (14) aufweist, die dazu eingerichtet sind, von einer Spannschraube (15) zusammengezogen zu werden, um die Rohrschelle (11) um das Rohr einzuspannen,
wobei der ringförmige Schellenkörper (12) dazu eingerichtet ist, das Rohr aufzunehmen, und eine Mittelachse (x) parallel zu einer Breitenrichtung des Schellenkörpers (12) aufweist,
wobei sich die Flansche (14) in Bezug auf eine Umfangsrichtung des ringförmigen Schellenkörpers (12) in einem Winkel nach außen erstrecken, wodurch eine Übergangszone (16) mit einem Winkelabschnitt zwischen dem ringförmigen Schellenkörper (12) und dem Flansch (14) ausgebildet wird,
wobei der ringförmige Schellenkörper an der Übergangszone eine Krümmung (20) in Breitenrichtung aufweist, wobei die Krümmung (20) einen Krümmungsradius (R) aufweist, wobei die Rohrschelle aus einem Streifenmaterial gefertigt ist, wobei die Flansche (14) bezüglich der Umfangsrichtung des ringförmigen Schellenkörpers (12) mit einer Biegeachse (x₁) im Wesentlichen parallel zur Mittelachse (x) nach außen gebogen sind, wobei die Biegung an der Übergangszone einen Biegeradius (r) um die Biegeachse (x₁) aufweist und **dadurch gekennzeichnet, dass** der Krümmungsradius (R) innerhalb eines Bereichs von 12r ≤ R ≤ 16r liegt.

2. Rohrschelle nach Anspruch 1, wobei die Krümmung (20) einen Krümmungsradius (R) aufweist, der über die Breite des Schellenkörpers konstant ist.

3. Rohrschelle nach Anspruch 1 oder 2, wobei der Schellenkörper eine Breite (B) aufweist, wobei der Krümmungsradius (R) innerhalb eines Bereichs von 0,7B bis 10B liegt.

4. Rohrschelle nach einem der vorhergehenden Ansprüche, wobei eine Sehne (18) zwischen den beiden Seitenkanten (19) des Schellenkörpers an der Krümmung (20) in Breitenrichtung an der Übergangszone definiert werden kann, wobei die maximale Entfernung von der Sehne zum Kreisbogen (A) kleiner als ⅓ R ist.

5. Rohrschelle nach einem der vorhergehenden Ansprüche, wobei die Rohrschelle aus einem Streifenmaterial gefertigt ist, wobei die Flansche (14) bezüglich der Umfangsrichtung des ringförmigen Schellenkörpers (12) mit einer Biegeachse (x₁) im Wesentlichen parallel zur Mittelachse (x) nach außen gebogen sind, wobei die Biegung an der Übergangszone einen Biegeradius (r) um die Biegeachse (x₁) aufweist und das Streifenmaterial eine Dicke s aufweist, und wobei der Biegeradius (r) innerhalb eines Bereichs s ≤ r ≤ 5s liegt.

6. Rohrschelle nach einem der vorhergehenden Ansprüche, wobei sich der Krümmungsradius an der Übergangszone von einem Krümmungsradius am Rest des ringförmigen Schellenkörpers unterscheidet.

7. Rohrschelle nach einem der vorhergehenden Ansprüche, wobei der ringförmige Schellenkörper zwei halbringförmige Körperteile (13) umfasst, die jeweils einen Endflansch (14) an mindestens einem Ende des halbringförmigen Körperteils (13) aufweisen, wobei die Flansche (14) der zwei halbringförmigen Körperteile (13) bei der Verwendung einander gegenüberliegend positioniert sind und ein Paar des mindestens einen Paars gegenüberliegender Flansche ausbilden.

8. Rohrschelle nach Anspruch 7, wobei die beiden halbringförmigen Körperteile (13) an jedem Ende des halbringförmigen Körperteils (13) einen Endflansch (14) aufweisen.

9. Rohrschelle nach Anspruch 7 oder 8, wobei die halbringförmigen Körperteile (13) im Wesentlichen halbkreisförmig sind.

10. Rohrschelle nach einem der vorhergehenden Ansprüche, wobei die Flansche (14) des mindestens einen Paars gegenüberliegender Flansche voneinander beabstandet sind, wenn der ringförmige Schellenkörper (12) bei der Verwendung um das Rohr eingespannt ist.

11. Rohrschelle nach einem der vorhergehenden Ansprüche, wobei der ringförmige Schellenkörper (12) aus einem Metallstreifen gefertigt ist.

12. Rohrschelle nach einem der Ansprüche 1-10, wobei der ringförmige Schellenkörper (12) aus einem Kunststoff- oder Verbundmaterial gefertigt ist.

## Revendications

1. Collier de serrage (11) comprenant un corps de collier annulaire (12) destiné à recevoir un tuyau, le corps de collier annulaire (12) ayant au moins une paire de pattes opposées (14) conçues pour être rapprochées l'une de l'autre par traction par une vis de serrage (15) pour serrer le collier de serrage (11) autour du tuyau,
le corps de collier annulaire (12) étant conçu pour recevoir le tuyau et présentant un axe central (x) parallèle à une direction de largeur du corps de collier (12),
les pattes (14) s'étendant à un certain angle vers l'extérieur par rapport à une direction circonférentielle du corps de collier annulaire (12), une zone de transition (16) présentant une partie angulaire étant ainsi formée entre le corps de collier annulaire (12) et la patte (14),
le corps de collier annulaire présentant, au niveau de la zone de transition, une courbure (20) dans la direction de largeur, la courbure (20) présentant un rayon de courbure (R), le collier de serrage étant fait d'un matériau en bande, les pattes (14) étant pliées vers l'extérieur par rapport à la direction circonférentielle du corps de collier annulaire (12) avec un axe de pliage (x₁) sensiblement parallèle à l'axe central (x), le pli présentant, au niveau de la zone de transition, un rayon de pliage (r) autour de l'axe de pliage (x₁), et **caractérisé en ce que** le rayon de courbure (R) est dans la plage 12r ≤ R ≤ 16r.

2. Collier de serrage selon la revendication 1, dans lequel la courbure (20) a un rayon de courbure (R) qui est constant sur toute la largeur du corps de collier.

3. Collier de serrage selon la revendication 1 ou 2, dans lequel le corps de collier a une largeur (B), dans lequel le rayon de courbure (R) est dans une plage de 0,7B à 10B.

4. Collier de serrage selon l'une quelconque des revendications précédentes, dans lequel une corde (18) peut être définie entre les deux bords latéraux (19) du corps de collier au niveau de la courbure (20) dans la direction de largeur au niveau de la zone de transition, dans lequel la distance maximale entre corde et arc (A) est inférieure à ⅓ R.

5. Collier de serrage selon l'une quelconque des revendications précédentes, le collier de serrage étant fait d'un matériau en bande, les pattes (14) étant pliées vers l'extérieur par rapport à la direction circonférentielle du corps de collier annulaire (12) avec un axe de pliage (x₁) sensiblement parallèle à l'axe central (x), le pli présentant, au niveau de la zone de transition, un rayon de pliage (r) autour de l'axe de pliage (x₁) et le matériau en bande ayant une épaisseur s, et le rayon de pliage (r) étant dans une plage s ≤ r ≤ 5s.

6. Collier de serrage selon l'une quelconque des revendications précédentes, dans lequel, au niveau de la zone de transition, le rayon de courbure est différent d'un rayon de courbure au niveau du reste du corps de collier annulaire.

7. Collier de serrage selon l'une quelconque des revendications précédentes, dans lequel le corps de collier annulaire comprend deux parties de corps semi-annulaires (13), chacune ayant une patte d'extrémité (14) à au moins une extrémité de la partie de corps semi-annulaire (13), dans lequel les pattes (14) des deux parties de corps semi-annulaires (13) sont positionnées, durant l'utilisation, en regard l'une de l'autre et forment une paire de ladite au moins une paire de pattes opposées.

8. Collier de serrage selon la revendication 7, dans lequel les deux parties de corps semi-annulaires (13) présentent une patte d'extrémité (14) à chaque extrémité de la partie de corps semi-annulaire (13).

9. Collier de serrage selon la revendication 7 ou 8, dans lequel les parties de corps semi-annulaires (13) sont sensiblement semi-circulaires.

10. Collier de serrage selon l'une quelconque des revendications précédentes, dans lequel les pattes (14) de l'au moins une paire de pattes opposées sont espacées l'une de l'autre lorsque le corps de collier annulaire (12) est serré autour du tuyau durant l'utilisation.

11. Collier de serrage selon l'une quelconque des revendications précédentes, dans lequel le corps de collier annulaire (12) est réalisé à partir d'une bande métallique.

12. Collier de serrage selon l'une quelconque des revendications 1 à 10, dans lequel le corps de collier annulaire (12) est fabriqué à partir d'une matière plastique ou composite.
